# EUROPÄISCHE PATENTSCHRIFT

(11) **EP 3 533 321 B1**
(45) Veröffentlichungstag und Bekanntmachung des Hinweises auf die Patenterteilung: **13.04.2022**
(21) Anmeldenummer: 19159885.3
(22) Anmeldetag: 28.02.2019
(51) Int. Cl.: A01G 23/00, B60P 3/41

(54) **MOBILE FORSTMASCHINE**
MOBILE FORESTRY MACHINE
MACHINE FORESTIÈRE MOBILE

(30) Priorität: 02.03.2018 DE 102018104810
(43) Veröffentlichungstag der Anmeldung: 04.09.2019
(73) Patentinhaber: Suffel Fördertechnik GmbH & Co. KG, 63741 Aschaffenburg (DE)
(72) Erfinder: WELSCHOF, Bernward, 63763 Großostheim (DE)
(74) Vertreter: Patentship Patentanwaltgesellschaft

(56) Entgegenhaltungen:
- DE-A1- 3 432 489
- DE-A1- 3 628 767
- JP-A- S59 109 437

## Beschreibung

Die Erfindung betrifft eine mobile Forstmaschine, die mit einem Fahrwerk, einem Antriebsmotor, einer Seilwinde und einer Runge versehen ist, wobei die Forstmaschine keinen Fahrerarbeitsplatz für einen Bediener aufweist, wobei in Fahrzeuglängsrichtung gesehen vorne und an der Fahrzeugfront der Antriebsmotor und benachbart zum Antriebsmotor die Seilwinde angeordnet ist.

Derartige mobile Forstmaschinen werden als Fällhilfe für Bäume und als Rückehilfe zum Vorliefern von gefällten Bäumen an einen Waldweg benutzt. Da die Forstmaschine keinen Fahrerarbeitsplatz für einen Bediener aufweist, kann eine gattungsgemäße Forstmaschine kompakt und leicht gebaut werden und ermöglicht es, in Waldgebieten eingesetzt zu werden, die für herkömmliche Großmaschinen nicht geeignet sind.

Bei mobilen Forstmaschinen ist bereits eine Bauweise bekannt, bei der in Fahrzeuglängsrichtung gesehen an der Fahrzeugfront und somit vor dem Antriebsmotor die Seilwinde angeordnet ist, benachbart zur Seilwinde der Antriebsmotor angeordnet ist und benachbart zum Antriebsmotor eine Runge angeordnet ist. Der Antriebsmotor ist somit in Fahrzeugslängsrichtung gesehen zwischen der Seilwinde und der Runge angeordnet. Bei einer derartigen Bauweise ist nachteilig, dass das Seil der Seilwinde unterhalb des Antriebsmotors hindurchgeführt werden muss und hinter dem Antriebsmotor an einer Umlenkrolle nach oben umgelenkt werden muss, um das Seil zu einem Seilauslass an einer in Fahrzeugquerrichtung verlaufenden Trennwand führen zu können, die zwischen Antriebsmotor und Runge angeordnet ist. Dies führt zu einem ungünstigen Kraftfluss der Kräfte der Seilwinde und begrenzt die Leistung der Seilwinde.

Aus der JP S59 109 437 A ist eine gattungsgemäße mobile Forstmaschine bekannt, die mit einem Fahrwerk, einem Antriebsmotor, einer Seilwinde und einer von einer Stütze gebildeten Runge versehen ist, wobei die Forstmaschine keinen Fahrerarbeitsplatz für einen Bediener aufweist, wobei in Fahrzeuglängsrichtung gesehen vorne und an der Fahrzeugfront der Antriebsmotor und benachbart zum Antriebsmotor die Seilwinde angeordnet ist. Bei der aus der JP S59 09 437 A bekannten Forstmaschine ist die Stütze in Fahrzeuglängsrichtung gesehen zwischen dem Antriebsmotor und der Seilwinde angeordnet. Die Seilführung des Windenseils erfolgt von der Seilwinde zuerst zum Fahrzeugheck nach hinten zu einer ersten Umlenkrolle, die an einem am Fahrzeugheck befestigten Haken eingehängt ist, und dann von der ersten Umlenkrolle schräg nach oben zurück zu einer an der Spitze der Stütze angeordneten zweiten Umlenkrolle und von der zweiten Umlenkrolle zu einem zu bewegenden Baumstamm. Dies führt ebenfalls zu einem ungünstigen Kraftfluss der Kräfte der Seilwinde und begrenzt die Leistung der Seilwinde.

Die DE 34 32 489 A1 offenbart einen Anhänger zum Transport von Stammholz für einen Schlepper, wobei der Anhänger mit einer schwenkbar gelagerten wannenförmigen Holz-Aufnahme für die Holzstämme und zwei Seitenabstützungen aufweist.

Der vorliegenden Erfindung liegt die Aufgabe zugrunde, eine mobile Forstmaschine der eingangs genannten Gattung zur Verfügung zu stellen, die hinsichtlich des Kraftflusses der Kräfte der Seilwinde und der Anordnung der Komponenten der Forstmaschine verbessert ist.

Diese Aufgabe wird erfindungsgemäß dadurch gelöst, dass die mobile Forstmaschine mit einem verstellbaren Rampenschild versehen ist, wobei in Fahrzeuglängsrichtung gesehen benachbart zur Seilwinde die Runge und am Fahrzeugheck der mobilen Forstmaschine das verstellbare Rampenschild angeordnet sind, wobei die Seilwinde in Fahrzeuglängsrichtung gesehen zwischen dem Antriebsmotor und der Runge angeordnet ist. Bei der erfindungsgemäßen Forstmaschine ist somit an der Fahrzeugfront und somit vor der Seilwinde der Antriebsmotor angeordnet, benachbart zum Antriebsmotor die Seilwinde angeordnet und benachbart zur Seilwinde die Runge angeordnet. Bei der erfindungsgemäßen mobilen Forstmaschine ist somit die Seilwinde in Fahrzeuglängsrichtung gesehen zwischen dem Antriebsmotor und der Runge angeordnet. Eine derartige Bauweise ermöglicht es, dass das Seil der Seilwinde direkt und ohne Umlenkung an einer Umlenkrolle von der Seilwinde nach oben zu einem Seilauslass geführt werden kann, der zwischen Antriebsmotor und Runge angeordnet ist. Dies führt zu einem günstigen Kraftfluss der Kräfte der Seilwinde und ermöglicht es, die Leistung der Seilwinde zu erhöhen.

Hinsichtlich kompakter Abmessungen der erfindungsgemäßen mobilen Forstmaschine in Fahrzeuglängsrichtung ergeben sich Vorteile, wenn der Antriebsmotor mit einer Längsachse in Fahrzeugquerrichtung angeordnet ist und mindestens eine Hydraulikpumpe, insbesondere eine Verstellpumpe, einer Hydraulikanlage der Forstmaschine antreibt. Bevorzugt ist der Antriebsmotor als kurzbauender Drei-Zylinder-Verbrennungsmotor, insbesondere Dieselmotor, ausgebildet, der zwei kompakte Verstellpumpen antreibt, die direkt an den Antriebsmotor angeflanscht sind. Dies ermöglicht es, eine kompakte Antriebseinheit der Forstmaschine, die aus dem Antriebsmotor und mindestens einer Verstellpumpe besteht, zu erzielen, die den Einbau der Antriebseinheit in Fahrzeugquerrichtung bei kompakten Fahrzeugabmessungen ermöglicht. Bevorzugt sind zwei Verstellpumpen vorgesehen, die vom Antriebsmotor angetrieben sind, um eine Zwei-Kreis-Hydraulikanlage der Forstmaschine zur Verfügung zu stellen.

Besondere Vorteile ergeben sich, wenn gemäß einer Ausgestaltungsform der Erfindung der Antriebsmotor und die Hydraulikpumpe in einem geschlossenen Motorraum angeordnet sind, der mit einer Dämmung versehen ist. Die Dämmung ist bevorzugt als Wärmedämmung und Schalldämmung ausgebildet. Der geschlossene Motorraum bildet somit eine kompakten Geräusch- und Wärmedämmbox, in der der Antriebsmotor mit den Hydraulikpumpen angeordnet ist. Der heiße und laute Raum um den Antriebsmotor und die Hydraulikpumpen bildet somit ein Motor-Pumpen-Abteil, das mit einer Wärmedämmung und Schalldämmung versehen ist, wodurch sich Vorteile hinsichtlich der im Betrieb der Forstmaschine von dem Antriebsmotor und den Hydraulikpumpen zur Umgebung abgestrahlten Geräusche und Abwärme ergibt.

Gemäß einer vorteilhaften Ausgestaltungsform der Erfindung sind der Antriebsmotor, die Seilwinde und die Runge in vertikaler Richtung oberhalb einer Bodenplatte angeordnet und ist unterhalb der Bodenplatte ein Unterboden angeordnet, wobei zwischen der Bodenplatte und dem Unterboden ein Zwischenraum ausgebildet ist. Die Bodenplatte und der Unterboden, die miteinander verbunden sind, bilden einen leichten und stabilen Fahrzeugrahmen der mobilen Forstmaschine. Die Bodenplatte trennt den Oberwagen, auf dem der Antriebsmotor, die Seilwinde und die Runge angeordnet sind, von dem Unterwagen der Forstmaschine, der mit dem Fahrwerk versehen ist. Sofern der Unterboden als durchgehendes Unterbodenblech ausgebildet ist, werden weitere Vorteile erzielt, da der Unterboden für einen durchgehenden Schutz ohne Hinterschnitte und Verhakelungsgefahr durch Bodenäste sorgt, wenn die Forstmaschine im Wald eingesetzt wird. Zudem ermöglicht es der Aufbau aus Bodenplatte und Unterboden, zwischen den beiden Ebenen, die von der Bodenplatte und dem Unterboden gebildet sind, eine Zwischenraum zu erzeugen, in dem Leitungen geschützt vor Beschädigungen und direkten Witterungseinflüssen, wie Nässe und Schnee, verlegt und eingebaut werden können.

Gemäß einer vorteilhaften Ausführungsform der Erfindung weist die Seilwinde einen in Fahrzeugquerrichtung mittig angeordneten Windenturm auf, der kraftführende Streben aufweist, die mit dem Fahrwerk verbunden sind. Der Windenturm, der in Fahrzeuglängsrichtung zwischen dem Antriebsmotor und der Runge angeordnet ist und in Fahrzeugquerrichtung mittig angeordnet ist, ermöglicht es, die Kräfte aus der Seilwinde an einem zentralen Bereich der Forstmaschine aufzunehmen und auf kurzen Wegen über die kraftführende Streben in das Fahrwerk einzuleiten.

Bevorzugt sind die kraftführenden Streben als Schottwände ausgebildet, die die Bodenplatte mit dem Unterboden verbinden. Die Schottwände sind bevorzugt vertikal angeordnet und verlaufen in Fahrzeugquerrichtung.

Gemäß einer vorteilhaften Ausgestaltungsform der Erfindung weist der Windenturm an der Oberseite einen Seilauslauf für ein Seil der Seilwinde auf. Von einem derartigen Seilauslauf an der Oberseite des Windenturms kann das Seil der Seilwinde auf einfache Weise in Richtung des Fahrzeughecks und des Rampenschildes geführt werden und somit eine Seilzugführung nach hinten erzielt werden, um mit der Seilwinde Baumstämme auf die Runge ziehen zu können. Das Seil der Seilwinde ist hierbei bevorzugt ohne Umlenkrolle von der Seilwinde zu dem Seilauslauf geführt.

Gemäß einer vorteilhaften Ausgestaltungsform der Erfindung weist die Forstmaschine an der der Runge zugewandten Seite des Windenturms eine in Fahrzeugquerrichtung verlaufende vertikale Trennwand auf. Die Trennwand trennt den vorderen Bereich der Forstmaschine, in dem der Antriebsmotor mit den Hydraulikpumpen und der Windenturm mit der Seilwinde angeordnet sind, von dem hinteren Bereich der Forstmaschine ab, der mit der Runge und dem Rampenschild versehen ist und zur Lastaufnahme von Baumstämmen dient.

Bevorzugt steht gemäß einer Weiterbildung der Erfindung der Antriebsmotor mit Dämpfungselementen auf der Bodenplatte der Forstmaschine auf und ist eine zusätzliche, in vertikaler Richtung oberhalb der Dämpfungselemente angeordnete Abstützung vorgesehen, mit der der Antriebsmotor an dem Windenturm abgestützt ist. Bevorzugt steht der Antriebsmotor mit drei oder vier Dämpfungselementen auf der Bodenplatte auf und ist die zusätzliche Abstützung in der Raumdiagonalen mit großem Hebelarm zu den Dämpfungselementen angeordnet. Die zusätzliche Abstützung stützt den Antriebsmotor bevorzugt im Bereich des Massenschwerpunktes des Antriebsmotors an dem Windenturm ab. Mit der zusätzlichen Abstützung des Antriebsmotors an dem Windenturm können Drehmomente und Giermomente des Antriebsmotors auf einfache Weise an dem Windenturm abgestützt werden und somit in Verbindung mit den Dämpfungselementen eine wirksame Geräuschdämpfung und Schwingungsabkopplung des Antriebsmotors erzielt werden, die zu einem geräuscharmen und vibrationsarmer Betrieb der Forstmaschine führen

Gemäß einer vorteilhaften Weiterbildung der Erfindung ist in Fahrzeugquerrichtung an einer ersten Seite des Windenturms ein Hydraulikraum ausgebildet, in dem eine oder mehrere der folgenden Komponenten der Hydraulikanlage der Forstmaschine eingebaut sind:
- Öltank
- Ölfilter
- mindestens ein Hydraulikventil

In Fahrzeugquerrichtung an einer ersten Seite des Windenturms ist mit dem Hydraulikraum ein Hydraulikabteil vorgesehen, in dem die von Öltank, Ölfilter und Hydraulikventilen bestehenden Komponenten der Hydraulikanlage der Forstmaschine eingebaut werden können und in dem Anschlüsse für Hydraulikschläuche vorgesehen sind, die zu den entsprechenden hydraulischen Verbrauchern der Forstmaschine geführt sind. Dies ermöglicht eine einfache Montage der Forstmaschine und erleichtert den Service der Komponenten der Hydraulikanlage im Wartungsfall.

Gemäß einer vorteilhaften Weiterbildung der Erfindung ist in Fahrzeugquerrichtung an einer zweiten Seite des Windenturms ein Serviceraum ausgebildet, in dem eine oder mehrere der folgenden Komponenten der Forstmaschine eingebaut sind:
- ein Treibstofftank des Antriebsmotors,
- eine Starterbatterie
- ein Frischluftfilter des Antriebsmotors

In Fahrzeugquerrichtung an einer zweiten Seite des Windenturms ist mit dem Serviceraum ein Serviceabteil vorgesehen, in dem ein Treibstofftank des Antriebsmotors, eine Starterbatterie und ein Frischluftfilter des Antriebsmotors angeordnet werden können. In dem Serviceraum sind somit mit dem Treibstofftank des Antriebsmotors, der Starterbatterie und dem Frischluftfilter des Antriebsmotors Komponenten der Forstmaschine angeordnet, die eine regelmäßige Kontrolle und Wartung benötigen. Die Anordnung dieser Komponenten in dem Serviceraum erleichtert die Wartung und Kontrolle dieser Komponenten.

Gemäß einer vorteilhaften Weiterbildung der Erfindung ist in Fahrzeugquerrichtung an einer Seite des Motorraums ein Elektronikraum ausgebildet, in dem eine oder mehrere der folgenden Komponenten einer Elektrikanlage der Forstmaschine eingebaut sind:
- eine elektronische Fahrzeugsteuerung der Forstmaschine
- eine elektronische Steuerung des Antriebsmotors
- eine Fernsteuerung der Forstmaschine mit Ladegerät und ein Empfänger der Fernsteuerung
- mindestens eine Steckdose

In Fahrzeugquerrichtung an einer Seite des Motorraums ist mit dem Elektronikraum ein Elektronikabteil vorgesehen, in dem die von der elektronischen Fahrzeugsteuerung der Forstmaschine, der elektronischen Steuerung des Antriebsmotors, der Fernsteuerung der Forstmaschine mit Ladegerät und Empfänger der Fernsteuerung, und mindestens einer Steckdose bestehenden Komponenten der Elektrikanlage der Forstmaschine eingebaut werden können. Dies ermöglicht eine einfache Montage der Forstmaschine und erleichtert den Service der Komponenten der Elektrikanlage im Wartungsfall.

Bevorzugt ist gemäß einer Weiterbildung der Erfindung in vertikaler Richtung oberhalb oder unterhalb des Elektronikraums ein Stauraum ausgebildet. Seitlich neben dem Motorraum und oberhalb oder unterhalb des Elektronikraums kann ein zusätzlicher abgeschlossener Stauraum bzw. Staufach vorgesehen werden, das gegenüber der Umgebung gut geschützt ist und die geschützte Mitführung von Utensilien ermöglicht, die für die Arbeit mit der Forstmaschine erforderlich sind, beispielsweise Mobiletelefon, Laptop, Aktenordner, Navigationsgerät.

Gemäß einer vorteilhaften Weiterbildung der Erfindung sind in vertikaler Richtung oberhalb des Antriebsmotors und der Hydraulikpumpe eine oder mehrere der folgenden Komponenten angeordnet:
- eine Kühlereinrichtung des Antriebsmotors
- eine Kühlereinrichtung der Hydraulikanlage
- eine Auspuffanlage des Antriebsmotors

Der Raum oberhalb des Antriebsmotors und der Hydraulikpumpen und somit der Raum oberhalb des Motorraums bildet somit ein Kühler- und Abgas-Abteil, in dem die Kühlereinrichtungen des Antriebsmotors und der Hydraulikanlage sowie der Auspuffanlage des Antriebsmotors eingebaut werden können. Die Kühlereinrichtung des Antriebsmotors und/oder die Kühlereinrichtung der Hydraulikanlage sowie die Auspuffanlage des Antriebsmotors sind bevorzugt an dem Windenturm befestigt. Dies ermöglicht eine einfache Montage der Forstmaschine und erleichtert den Service dieser Komponenten im Wartungsfall. Zudem kann die Abwärme und die Geräusche der Kühlereinrichtungen des Antriebsmotors und der Hydraulikanlage sowie der Auspuffanlage des Antriebsmotors in vorteilhafterweise direkt nach vertikal oben an die Umgebung abgeführt werden.

Gemäß einer Weiterbildung der Erfindung ist ein Hitzeschutz- und Geräuschdämmkasten vorgesehen, in dem die Auspuffanlage angeordnet ist. Der Hitzeschutz- und Geräuschdämmkasten bildet somit einen Hitzeschutz- und Geräuschdämmbox um die Auspuffanlage und schützt die umliegenden Komponenten vor der Abwärme der Auspuffanlage des Antriebsmotors.

Besondere Vorteile ergeben sich, wenn die Kühlereinrichtung des Antriebsmotor und/oder die Kühlereinrichtung der Hydraulikanlage liegend angeordnet ist mit einem Luftauslass eines Kühlluftstromes nach vertikal oben. Dies ermöglicht es, die Abwärme der Kühlereinrichtung des Antriebsmotors und/oder die Kühlereinrichtung der Hydraulikanlage über einen großen Luftauslass an der Oberseite der Forstmaschine an die Umgebung nach oben abzuführen.

Gemäß einer vorteilhaften Weiterbildung der Erfindung sind in dem Zwischenraum zwischen Bodenplatte und Unterboden Hydraulikschläuche verlegt, die die Verbraucher der Hydraulikanlage mit dem Hydraulikraum verbinden. Hierdurch ergibt sich eine vor Beschädigungen und Umwelteinflüssen, beispielsweise Regen und Schnee, geschützte Unterflurverlegung der Hydraulikschläuche von dem Hydraulikraum zu den Verbraucher der Hydraulikanlage, beispielswiese den hydraulischen Fahrmotoren, einem hydraulischen Antriebsmotor der Seilwinde, und Hydraulikzylinder zur Betätigung des Rampenschildes.

Bevorzugt sind gemäß einer vorteilhaften Ausgestaltungsform der Erfindung in der vertikalen Trennwand Ansaugöffnungen für einen zu der Kühlereinrichtung des Antriebsmotors und der Kühlereinrichtung der Hydraulikanlage führenden Kühlluftstrom angeordnet. Die Anordnung der Ansaugöffnungen für einen zu der Kühlereinrichtung des Antriebsmotors und der Kühlereinrichtung der Hydraulikanlage führenden Kühlluftstrom in der vertikalen Trennwand zwischen Windenturm und Runge ermöglicht es, kühle Frischluft des Kühlluftstroms aus der staubfreien Zone zwischen Trennwand und Runge anzusaugen. Durch die Lage und Anordnung der Ansaugöffnungen in der vertikalen Trennwand und des Luftauslasses an den Kühlereinrichtungen oberhalb des Motorraums wird zudem ermöglicht, dass die kühle Zuluftströmung aus möglichst staubfreier Zone von der Runge und die warme Abluftströmung mitsamt Geräusch über die Kühlereinrichtung nach vertikal oben ohne thermischen Kurzschluss gewährleistet wird.

Gemäß einer vorteilhaften Weiterbildung der Erfindung sind eine Seilumlenkrolle und eine Seilführung mit einer Führungsschiene für das Seil der Seilwinde vorgesehen, wobei die Führungsschiene eine Austrittsöffnung für das Seil an der Fahrzeugfront aufweist. Die Führungsschiene mit der Austrittsöffnung für das Seil an der Fahrzeugfront in Verbindung mit der Umlenkrolle ermöglicht somit auf einfache Weise eine Seilzugführung nach vorne, beispielsweise für den bergseitigen Transport von Baustämmen. Die Seilumlenkrolle ist bevorzugt im vertikal unteren Bereich der Trennwand angeordnet und die Führungsschiene erstreckt sich unter dem Windenturm und unter dem Motorraum hindurch zur Fahrzeugfront der Forstmaschine.

Vorteilhafterweise ist die Runge um eine vertikale Achse drehbar gelagert. Die drehbare Runge kann vorteilhafterweise mittels einer Arretiervorrichtung in einer oder mehreren Stellungen arretierbar sein. Zudem ist es möglich, die Runge demontierbar auszuführen.

Gemäß einer Weiterbildung der Erfindung ist in Fahrzeuglängsrichtung zwischen der Runge und dem Rampenschild an der Bodenplatte eine Querversteifung angeordnet. Die Querversteifung ermöglicht eine verwindungssteife und stabile Ausführung der Forstmaschine am Fahrzeugheck, an dem das verstellbare Rampenschild gelagert ist und über das Baustämme mittels der Seilwinde auf die Runge gezogen werden.

Besondere Vorteil ergeben sich, wenn in Fahrzeuglängsrichtung zwischen dem Motorraum und dem Seilauslauf an dem Windenturm eine in Fahrzeugquerrichtung verlaufende Ablagemulde ausgebildet ist, die bevorzugt nach oben offen ausgebildet ist. Die Ablagemulde kann einen U-förmigen oder V-förmigen Querschnitt haben und stellt einen nach oben offenen Behälter an der Oberseite der Forstmaschine dar. Eine derartige Ablagemulde ermöglicht es, größere Werkzeuge an der Forstmaschine mitzuführen, beispielsweise einen Fällwender, Äxte, Spalthammer, Ketten, eine Kettensäge oder einen Feuerlöscher.

Bevorzugt ist eine äußere Abdeckhaube vorgesehen, die den Motorraum an der Fahrzeugfrontseite begrenzt und sich an den beiden Fahrzeugaußenseiten bis zur Trennwand erstreckt. Eine derartige Abdeckhaube dient zur Geräuschdämmung der vorderen Fahrzeughälfte der Forstmaschine, in der mit dem Antriebmotor, den Hydraulikpumpen und der Seilwinde die Leistungskomponenten der Forstmaschine untergebracht sind.

Vorteilhafterweise ist ein aus Rohren bestehender Schutzrahmen für die Abdeckhaube vorgesehen. Dadurch kann die Abdeckhaube auf einfache Wiese vor direkter Krafteinleitung und Beschädigungen geschützt werden.

Die erfindungsgemäße Forstmaschine weist eine Reihe von Vorteilen auf.

Die Anordnung der Seilwinde in Fahrzeuglängsrichtung zwischen Antriebsmotor und Runge ermöglicht einen günstigen Kraftfluss der Kräfte der Seilwinde und eine günstige Weiterleitung der Kräfte der Seilwinde über den Windenturm in das Fahrwerk. Die Forstmaschine kann daher mit einer leistungsstarken Seilwinde versehen werden.

In dem Motorraum, dem Hydraulikraum, dem Serviceraum und dem Elektronikraum können zusammengehörige Funktionen räumlich nah in dem entsprechenden Raum angeordnet werden. Die Aufteilung der zusammengehörigen Komponenten in die entsprechenden Räume (Motorraum, Hydraulikraum, Serviceraum, Elektronikraum) ermöglicht eine Optimierung in der Konstruktion der Forstmaschine und ermöglicht eine einfache Montage und eine einfache Wartung im Servicefall. Zudem ergeben sich Vorteile im Betrieb der Forstmaschine, da die heißen Komponenten (Antriebsmotor, Hydraulikpumpen, Kühlereinrichtungen, Auspuffanlage) in den entsprechenden Räumen auf einfache Weise thermisch gedämmt werden können. Die Kühlluftführung mit Ansaugung von Frischluft an der Trennwand und Abfuhr der erwärmten Abluft an der Oberseite der Kühlereinrichtungen ermöglicht eine effektive Kühlung der heißen Komponenten ohne Gefahr eines thermischen Kurzschlusses.

Durch die Fernbedienung ist die Forstmaschine einfach und ohne lange Einarbeitungszeit zu bedienen. Durch die Fernbedienbarkeit entsteht für den Bediener weiterhin kein Fahrerrisiko am Hang oder im Wald. Die Forstmaschine ist kompakt und leicht und als Fällhilfe für Bäume und als Rückehilfe von gefällten Bäumen zu Waldwegen einsetzbar. Ein auf der Runge abgelegter Baumstamm führt durch das auf die Forstmaschine wirkende Gewicht trotz geringem Eigengewicht der Forstmaschine zu einer hohen Traktion. Die Forstmaschine weist bevorzugt eine Breite von maximal 1,5m auf, so dass die Forstmaschine auf einem Autoanhänger zu den Einsatzorten transportiert werden kann. Die Forstmaschine ist günstig in der Anschaffung und ermöglicht eine wirtschaftliche Bewirtschaftung von kleinen Waldparzellen. Durch das Raupenfahrwerk in Verbindung mit dem geringen Eigengewicht kann eine Flächenpressung und Bodendruck im Bereich von 0,2kg/cm² erzielt werden.

Weitere Vorteile und Einzelheiten der Erfindung werden anhand des in den schematischen Figuren dargestellten Ausführungsbeispiels näher erläutert. Hierbei zeigt
- Figur 1: eine perspektivische Darstellung einer erfindungsgemäßen mobilen Forstmaschine,
- Figur 2: eine Draufsicht auf die erfindungsgemäßen Forstmaschine,
- Figur 3: eine Seitenansicht der erfindungsgemäßen Forstmaschine,
- Figur 4: eine Vorderansicht der erfindungsgemäßen Forstmaschine,
- Figur 5: eine perspektivische Darstellung der erfindungsgemäßen mobilen Forstmaschine mit Darstellungen von Komponenten,
- Figur 6: eine Darstellung gemäß der Figur 5 mit der Darstellung von weiteren Komponenten,
- Figur 7: einen Querschnitt der Forstmaschine im Bereich des Windenturms,
- Figur 8: eine Darstellung der erfindungsgemäßen Forstmaschine mit einer Verdeutlichung des Aufbaus der Seilwinde und des Windenturms,
- Figur 9: eine perspektivische Darstellung der erfindungsgemäßen mobilen Forstmaschine mit Verdeutlichung der Aufhängung des Antriebsmotors,
- Figur 10: eine perspektivische Darstellung der erfindungsgemäßen mobilen Forstmaschine mit Verdeutlichung der Kühlluftströmung und
- Figur 11: eine perspektivische Darstellung der erfindungsgemäßen mobilen Forstmaschine mit Verdeutlichung einer Seilführung nach vorne.

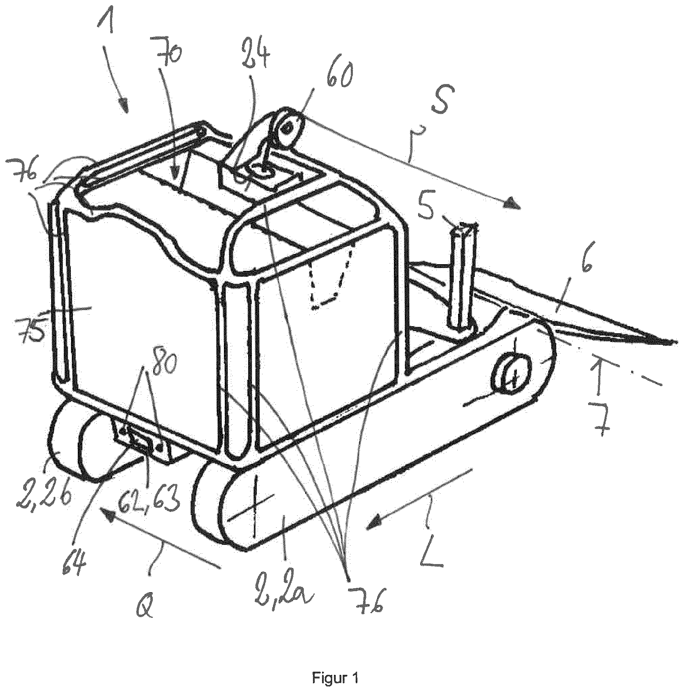

In der Figur 1 ist eine erfindungsgemäße mobile Forstmaschine 1 in einer perspektivischen Darstellung dargestellt.

Die mobile Forstmaschine 1 umfasst ein Fahrwerk 2, das von zwei Raupenfahrwerken 2a, 2b gebildet ist, die jeweils von einem hydraulischen Fahrantriebsmotor angetrieben sind.

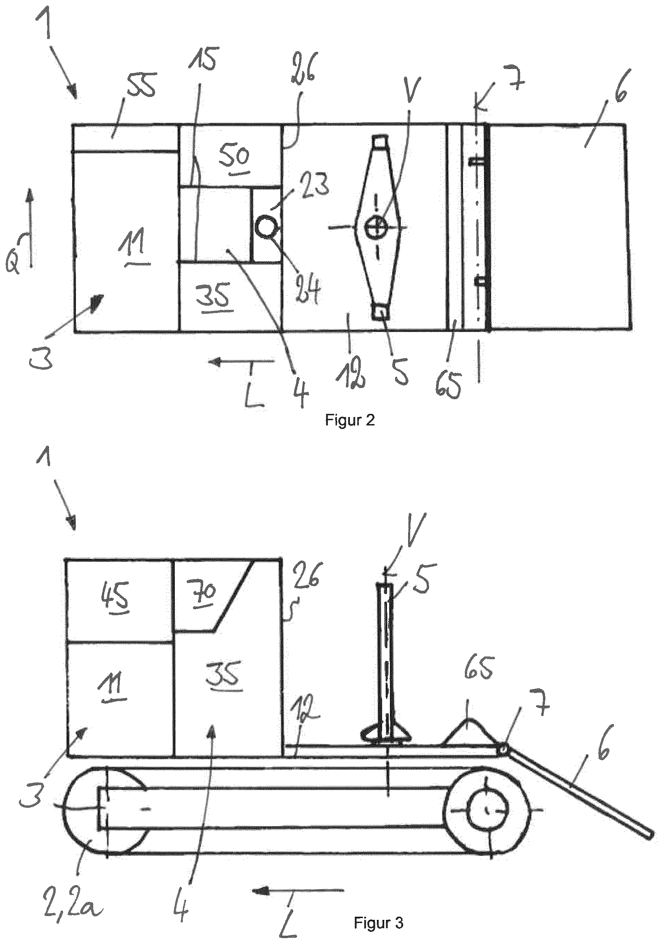

Die mobile Forstmaschine 1 weist - wie in Verbindung mit den Figuren 2 bis 9 näher ersichtlich ist - einen Antriebsmotor 3, eine Seilwinde 4, eine Runge 5 und ein verstellbares Rampenschild 6 auf, das um eine horizontale Fahrzeugquerachse 7 verstellbar ist. Die Forstmaschine 1 weist keinen Fahrerarbeitsplatz für einen Bediener aufweist und ist mittels einer nicht näher dargestellten Fernbedienung von einem Bediener bedienbar.

Bei der erfindungsgemäßen Forstmaschine 1 ist in Fahrzeuglängsrichtung L gesehen vorne der Antriebsmotor 3, benachbart zum Antriebsmotor 3 die Seilwinde 4, benachbart zur Seilwinde 4 die Runge 5 und am Fahrzeugheck das verstellbare Rampenschild 7 angeordnet sind. Die Seilwinde 4 in somit in Fahrzeuglängsrichtung gesehen zwischen der Runge 5 und dem Antriebsmotor 3 angeordnet.

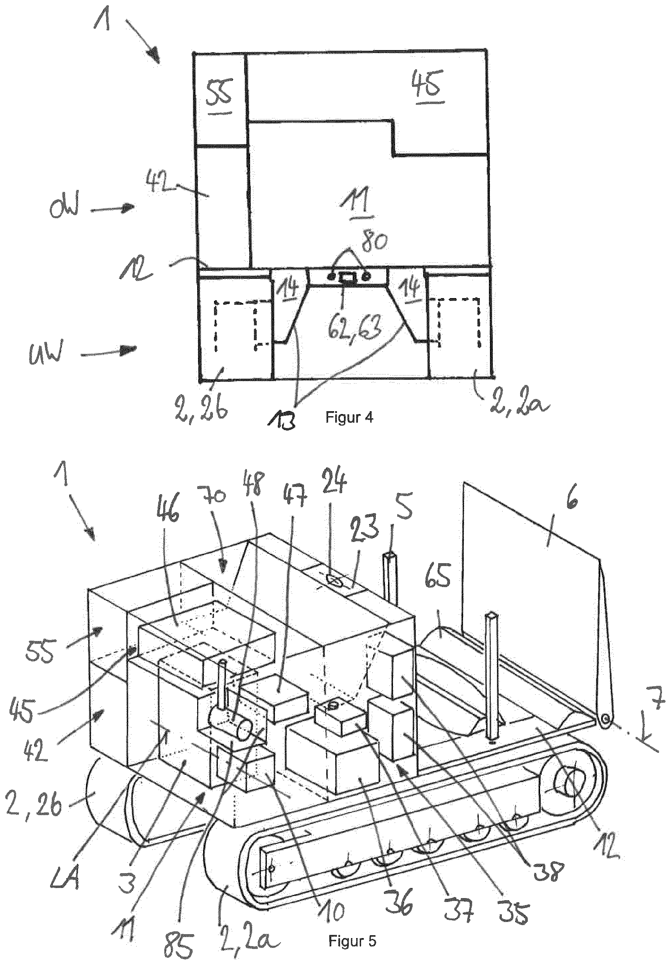

Der Antriebsmotor 3 ist - wie aus der Figur 5 ersichtlich ist - mit einer Längsachse LA in Fahrzeugquerrichtung angeordnet und treibt mindestens eine Hydraulikpumpe 10, beispielsweise eine Verstellpumpe, einer Hydraulikanlage der Forstmaschine an. Der Antriebsmotor 4 ist als Verbrennungsmotor ausgebildet, bevorzugt als Drei-Zylinder-Verbrennungsmotor. Die Hydraulikpumpe 10 ist direkt an den Antriebsmotor 3 angeflanscht. Ein Drei-Zylinder-Verbrennungsmotor ermöglicht in Verbindung mit einer oder mehreren kurzbauenden Verstellpumpen den Quereinbau der von dem Antriebsmotor 3 und den Hydraulikpumpen 10 gebildeten Antriebseinheit in Fahrzeugquerrichtung Q.

Der Antriebsmotor 3 und die Hydraulikpumpe 10 sind in einem geschlossenen Motorraum 11 angeordnet, der mit einer Dämmung (Wärmedämmung und Schalldämmung) versehen ist. Der Motorraum 11 bildet somit ein Motor-Pumpen-Abteil. Der im Betrieb der Forstmaschine 1 heiße und laute Raum um den Antriebsmotor 3 und die Hydraulikpumpe 10 wird mit dem gedämmten Motorraum 11 zu einer kompakten Geräusch- und Wärmedämmbox.

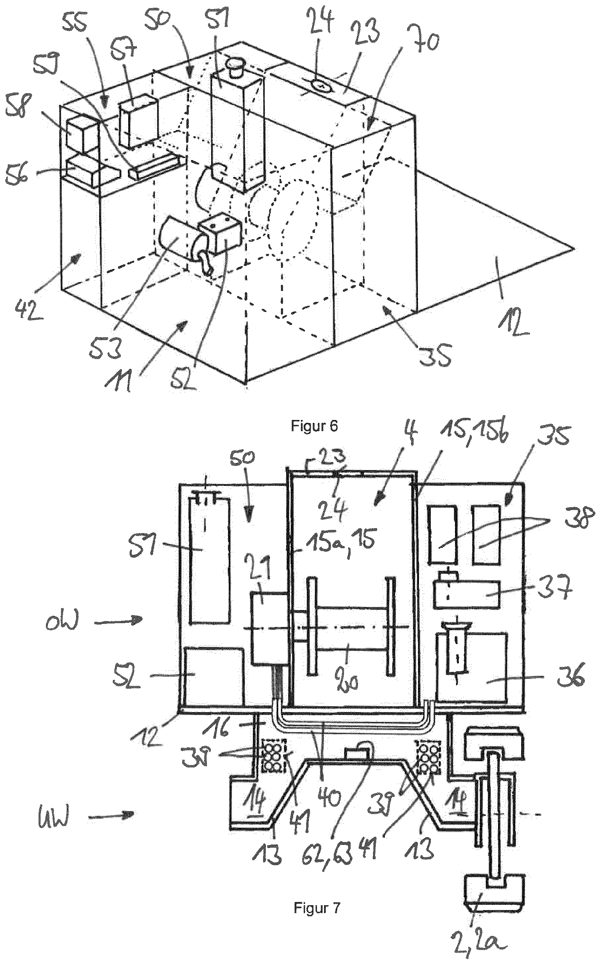

Der Antriebsmotor 3, die Seilwinde 4 und die Runge 5 sind in vertikaler Richtung oberhalb einer Bodenplatte 12 angeordnet. Unterhalb der Bodenplatte 12 ist - wie in den Figuren 4 und 7 näher dargestellt ist - ein Unterboden 13 angeordnet, wobei zwischen der Bodenplatte 12 und dem Unterboden 13 ein Zwischenraum 14 ausgebildet ist. Die Bodenplatte 12 trennt somit einen Oberwagen OW von einem Unterwagen UW der Forstmaschine 1. In dem Unterwagen UW ist das Fahrwerk 2 mit den Fahrantriebsmotoren angeordnet.

Die Seilwinde 5 weist - wie in den Figuren 6 bis 8 näher dargestellt ist - einen in Fahrzeugquerrichtung Q mittig angeordneten Windenturm 15 auf, der kraftführende Streben 16 aufweist, die mit dem Fahrwerk 2 verbunden sind. Der Windenturm 15 besteht aus zwei senkrechten, in Fahrzeuglängsrichtung verlaufenden und voneinander in Fahrzeugquerrichtung beabstandeten Trägerplatten 15a, 15b ausgebildet, die mit dem Bodenblech 12 verbunden sind. Die Streben 16 sind als senkrecht angeordnete und in Fahrzeugquerrichtung verlaufende Trägerplatten, die gleichzeitig Schottwände zwischen der Bodenplatte 12 und dem Unterboden 13 bilden und die Bodenplatte 12 mit dem Unterboden 13 verbinden. An dem Windenturm 15 ist eine drehbare Seiltrommel 20 und ein hydraulischer Antriebsmotor 21 zum Antrieb der Seiltrommel 20 angeordnet.

Die beiden Trägerplatten 15a, 15b sind am oberen Ende mit einer Querstrebe 23 verbunden, in der ein Seilauslauf 24 für ein auf der Seiltrommel 20 befindliches Seil S der Seilwinde 4 angeordnet ist. Das Seil S ist von der Seiltrommel 20 ohne Umlenkrolle zu dem Seilauslauf 24 geführt.

An der der Runge 5 zugewandten Seite des Windenturms 4 ist eine in Fahrzeugquerrichtung Q verlaufende vertikale Trennwand 26 angeordnet. Die Trennwand 26 trennt eine vordere Hälfte von einer hinteren Hälfte der Forstmaschine 1 ab. Die Trennwand 26 erstreckt sich über die gesamte Fahrzeugbreite.

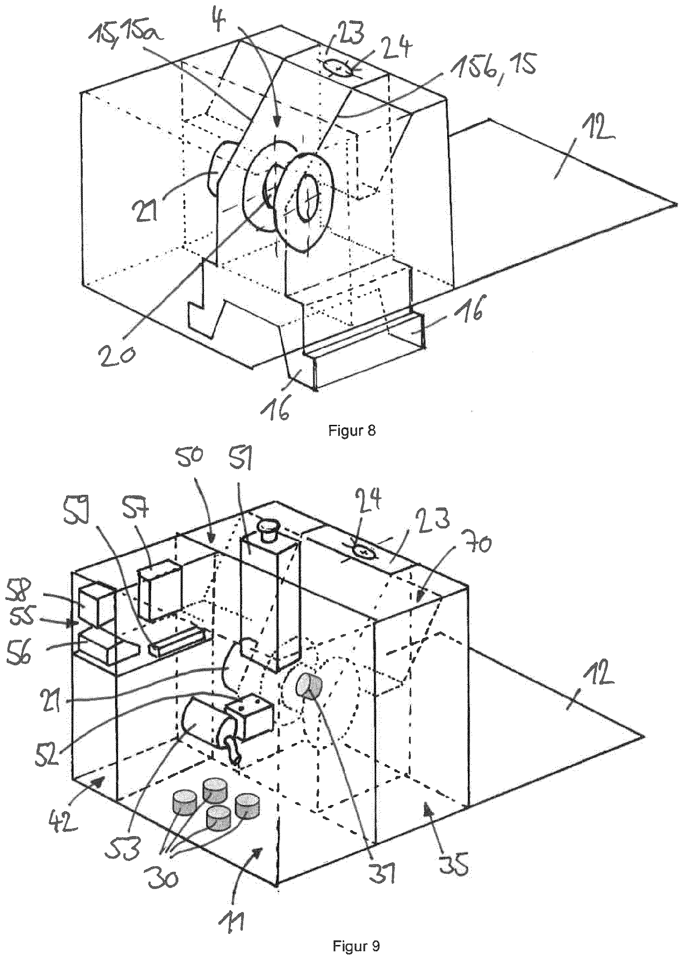

Der Antriebsmotor 3 ist - wie in der Figur 9 näher dargestellt ist - mit mehreren Dämpfungselementen 30, im dargestellten Ausführungsbeispielen vier Dämpfungselementen 30, auf der Bodenplatte 12 der Forstmaschine 1 abgestützt und befestigt. Weiterhin ist eine zusätzliche, in vertikaler Richtung oberhalb der Dämpfungselemente 30 angeordnete Abstützung 31 vorgesehen ist, mit der der Antriebsmotor 3 an dem Windenturm 15 abgestützt ist. Die Dämpfungselemente 30 und die Abstützung 31 dienen der Geräuschdämpfung und Schwingungsabkopplung des Antriebsmotors 3. Die zusätzliche Abstützung 31 ist in der Raumdiagonalen angeordnet mit einem großen Hebelarm zu den Dämpfungselementen 30 angeordnet und ermöglicht eine Drehmoment- und Giermomentabstützung des Antriebsmotors 3 nahe am Massenschwerpunkt des Antriebsmotor 3 am stabilen Windenturm 15.

In Fahrzeugquerrichtung Q an einer ersten Seite des Windenturms 15 ist ein Hydraulikraum 35 ausgebildet (Figur 2), in dem - wie in der Figur 5 und der Figur 7 dargestellt ist - eine oder mehrere der folgenden Komponenten der Hydraulikanlage der Forstmaschine eingebaut sind:
- Öltank 36
- Ölfilter 37
- mindestens ein Hydraulikventil 38.

Die Hydraulikventile 38 dienen zur Steuerung der hydraulischen Fahrmotoren, des Antriebsmotors 21 der Seiltrommel 20 und von nicht näher dargestellten Hydraulikzylindern zur Betätigung des Rampenschildes 6.

Der Hydraulikraum 35 bildet somit ein Hydraulikabteil, in dem Komponenten der Hydraulikanalage der Forstmaschine 1 zusammengefasst und angeordnet sind und in dem Anschlüsse für Hydraulikschläuche 39, 40 angeordnet sind, die zu den Verbrauchern (hydraulische Fahrmotore, Antriebsmotor 21 der Seiltrommel 20, Hydraulikzylindern zur Betätigung des Rampenschildes 6) geführt sind.

Die Hydraulikschläuche 39, 40, die von dem Hydraulikraum 35 zu den Verbrauchern geführt sind, sind - wie in der Figur 7 dargestellt sind - geschützt in dem Zwischenraum 14 zwischen der Bodenplatte 12 und dem Unterboden 13 verlegt. Die als Schottwände ausgebildeten Streben 16 und weitere Schottwände 16 zwischen Bodenplatte 12 und dem Unterboden 13 können hierfür mit entsprechenden Ausnehmungen 41 versehen werden, durch die die Hydraulikschläuche 39 verlegt sind. In dem Zwischenraum 14 können weiterhin Schlauchleitungen verlegt sein, die die Hydraulikpumpen 10 im Motorraum 11 mit dem Ölbehälter 36 und den Hydraulikventilen 38 verbinden.

Die Verlegung der Hydraulikschläuche 39, 40 ist somit unterflur. Die Hydraulikschläuche 39, 40 sind in dem Zwischenraum 14 zwischen Bodenplatte 12 und Unterboden 13 von dem Hydraulikraum 35 zu den entsprechenden Verbrauchern (Antriebsmotor 21 der Seiltrommel 20, Fahrmotoren, Hydraulikzylinder des Rampenschildes 6) vor Beschädigung und direktem Wasser geschützt verlegt und durch entsprechende Ausnehmungen 41 in den Streben 16 und weiteren Schottwänden geführt.

In Fahrzeugquerrichtung Q an einer zweiten Seite des Windenturm 15 ist ein Serviceraum 50 ausgebildet (Figur 2), in dem - wie in den Figuren 6 und 7 dargestellt ist - eine oder mehrere der folgenden Komponenten der Forstmaschine eingebaut sind:
- ein Treibstofftank 51 des Antriebsmotors 3,
- eine Starterbatterie 52
- ein Frischluftfilter 53 des Antriebsmotors 3.

Der Serviceraum 50 bildet somit ein Service-Abteil, in dem mit dem Triebstofftank 51, der Starterbatterie 52 und dem Frischluftfilter 53 Komponenten der Forstmaschine 1 angeordnet sind, die eine zyklische Kontrolle erfordern.

In Fahrzeugquerrichtung Q an einer Seite des Motorraums 11 ist ein Elektronikraum 55 ausgebildet ist (Figur 2), in dem - wie aus der Figur 6 dargestellt ist - eine oder mehrere der folgenden Komponenten einer Elektrikanlage der Forstmaschine eingebaut sind:
- eine elektronische Fahrzeugsteuerung 56 der Forstmaschine
- eine elektronische Steuerung 57 des Antriebsmotors
- eine Fernsteuerung der Forstmaschine mit Ladegerät und ein Empfänger 58 der Fernsteuerung
- mindestens eine Steckdose 59.

Der Elektronikraum 55 bildet somit ein Elektronik-Abteil, der besonders gegen Feuchtigkeit und Wasser geschützt ist, so dass der Elektronikraum 55 einen geschützten trockenen, moderat temperierten und schwingungsarmen Raum bildet, in dem die genannten elektrischen bzw. elektronischen Komponenten sicher eingebaut werden können.

In vertikaler Richtung oberhalb oder unterhalb des Elektronikraums 55, im dargestellten Ausführungsbeispiel unterhalb des Elektronikraums 35 ist ein Stauraum 42 ausgebildet, wie in den Figuren 4-6 dargestellt ist. Der Stauraum 42 bildet ein geschütztes Staufach und dient zur Aufbewahrung von Utensilien, die für den Betrieb der Forstmaschine 1 mitgeführt werden müssen, beispielswiese Mobiltelefon, Notebook, Aktenordner und Navigationsgerät.

In vertikaler Richtung oberhalb des Antriebsmotors 3 und der Hydraulikpumpe 10 und somit oberhalb des Motorraums 1 sind in einem Kühler-und Abgasraum 45 eine oder mehrere der folgenden Komponenten angeordnet sind:
- eine Kühlereinrichtung 46 des Antriebsmotors 3
- eine Kühlereinrichtung 47 der Hydraulikanlage
- eine Auspuffanlage 48 des Antriebsmotors 3.

Die Kühlereinrichtung 46 und/oder die Kühlereinrichtung 47 können mit einem angetriebenen Lüfter versehen sein, der einen Kühlluftstrom erzeugt.

Der Kühler-und Abgasraum 45 bildet somit ein Kühler- und Abgas-Abteil, in dem die entsprechenden Kühlereinrichtungen 46, 47 des Antriebsmotors 3 und der Hydraulikanlage und die Auspuffanlage 48 des Antriebsmotors 3 angeordnet sind. Die Kühlereinrichtungen 46, 47 des Antriebsmotors 3 und der Hydraulikanlage und die Auspuffanlage 48 sind bevorzugt an dem Windenturm 15 befestigt.

Die Kühlereinrichtung 46 des Antriebsmotors 3 und/oder die Kühlereinrichtung 47 der Hydraulikanlage sind bevorzugt liegend angeordnet und weisen einen Luftauslass eines Kühlluftstromes nach vertikal oben auf. Der Kühler-und Abgasraum 45 ist bevorzugt an der Oberseite offen ausgeführt und weist keinen Deckel auf. Die Kühlereinrichtung 46 des Antriebsmotors 3 und/oder die Kühlereinrichtung 47 der Hydraulikanlage ermögliche somit eine Luft- und Wärmeabfuhr nach oben. Entsprechend ermöglicht die Auspuffanlage 48 eine Geräuschabführung nach oben.

Um an der Auspuffanlage 48 umliegende Komponenten vor der Abwärme der Auspuffanlage 48 zu schützen, ist bevorzugt ein Hitzeschutz- und Geräuschdämmkasten 85 vorgesehen ist, in dem die Auspuffanlage 48 angeordnet ist.

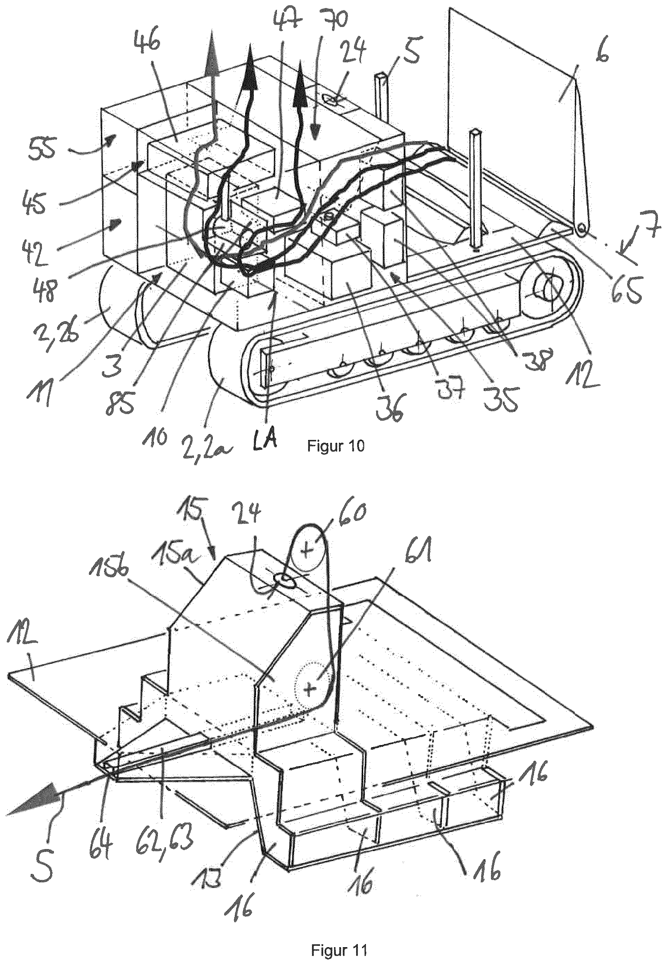

In der vertikalen Trennwand 26 sind nicht näher dargestellte Ansaugöffnungen für einen zu der Kühlereinrichtung 46 des Antriebsmotors 3 und der Kühlereinrichtung 47 der Hydraulikanlage führenden Kühlluftstrom angeordnet, der in der Figur 10 mit den Pfeilen dargestellt ist. Die Ansaugöffnungen sind bevorzugt in Fahrzeugquerrichtung im mittleren Bereich der Trennwand 5 angeordnet, in dem ebenfalls der Windenturm 15 angeordnet ist. Die Frischluftzufuhr erfolgt somit durch die Trennwand 26, wobei der Kühlluftstrom von den Ansaugöffnungen in der Trennwand 5 durch den Windenturm 15, unter dem Motorraum 11 für Antriebsmotor 3 und Hydraulikpumpen 10 durch hoch zu den mit den Lüftern versehenen Kühlereinrichtungen 46, 47 erfolgt. Diese Kühlluftströmung ermöglicht es, dass kühle Zuluft aus möglichst staubfreier Zone vor der Runge 5 angesaugt wird und die warme Abluft mitsamt Geräusch über die Kühlereinrichtungen 46, 47 nach oben abströmen kann ohne zu einem thermischen Kurzschluss zwischen kühlem Zuluftstrom und warmem Abluftstrom zu führen.

Über den Seilauslauf 24 kann das Seil S der Seiltrommel 20 - wie in der Figur 1 dargestellt ist - über eine Seilumlenklenkrolle 60 nach hinten zum Fahrzeugheck geführt werden, um einen oder mehrere Baumstämme über das Rampenschild 6 auf die Runge 5 zu ziehen. Ein auf der Runge 5 abgelegter Baumstamm führt zu einer Erhöhung der Traktion der Forstmaschine 1, so dass trotz geringem Eigengewicht der Forstmaschine 1 eine hohe Zugleistung beim Transport von Baustämmen erzielt werden.

Um alternativ eine Seilzugführung des Seils S der Seiltrommel 20 nach vorne zur Fahrzeugfront zu ermöglichen, ist - wie in der Figur 11 dargestellt ist - eine weitere Seilumlenkrolle 61 vorgesehen und eine Seilführung 62 mit einer Führungsschiene 63 für das Seil S der Seilwinde 4 vorgesehen. Die Seilumlenkrolle 61 ist im unteren Bereich der Trennwand 26 angeordnet. Die Seilführung 62 mit der Führungsschiene 63 erstreckt sich von der Trennwand 26 unter dem Windenturn 16 und dem Motorraum 11 hindurch zur vorderen Stirnseite der Forstmaschine 1, wo die Führungsschiene 63 eine Austrittsöffnung 64 für das Seil S an der Fahrzeugfront aufweist.

Die Runge 5 ist bevorzugt um eine vertikale Achse V drehbar gelagert, wie in den Figuren 2 und 3 dargestellt ist. Die drehbare Runge 5 kann vorteilhafterweise mittels einer Arretiervorrichtung in einer oder mehreren Stellungen arretierbar sein. Zudem ist es möglich, die Runge 5 demontierbar auszuführen. Die hintere Fahrzeughälfte, die sich von der Trennwand 26 zum Fahrzeugheck erstreckt, bildet bei demontierter Runge 5 einen Lastenteil, der als Aufbauraum ausgeführt ist und auf dem anstelle von Baumstämmen auch andere schwere Güter transportiert werden können, beispielsweise Zäune, Wassercontainer, Baumaterialien oder Agrargüter. In Verbindung mit der Seilzugführung nach vorne, bei der das Seil S an der Austrittsöffnung 64 an der Fahrzeugfront herausgeführt ist, kann die Forstmaschine 1 mit den auf dem Aufbauraum mitgeführten Güter mittels der Fahrmotoren einen Berg hochfahren und durch Mithilfe der Seilwinde 4 den Berg hinaufgezogen werden.

In Fahrzeuglängsrichtung L zwischen der Runge 5 und dem Rampenschild 6 ist an der Oberseite der Bodenplatte 12 weiterhin eine Querversteifung 65 angeordnet, die in den Figuren 2, 3, 5 und 10 näher dargestellt ist.

In Fahrzeuglängsrichtung L zwischen dem Motorraum 11 bzw. dem Kühler- und Abgasraum 45 und dem Seilauslauf 24 an dem Windenturm 15 ist eine in Fahrzeugquerrichtung Q verlaufende Ablagemulde 70 ausgebildet, die bevorzugt nach oben offen ausgebildet ist. Die Ablagemulde 70 weist im dargestellten Ausführungsbeispiel einen V-förmigen Querschnitt auf. Die nach oben offene Ablagemulde 70 bildet einen nach oben offenen Behälter, der es ermöglicht, größere Werkzeuge mitzunehmen, beispielsweise Fällwender, Äxte, Spalthammer, Ketten, eine Kettensäge oder einen Feuerlöscher.

Bei der erfindungsgemäßen Forstmaschine 1 bildet die vordere Fahrzeughälfte, die sich von der Fahrzeugfront bis zur Trennwand 26 erstreckt, einen Antriebsteil, in dessen vorderer Hälfte der Motorraum 11 mit dem quer eingebauten Antriebsmotor 3 und den Hydraulikpumpen 10 angeordnet ist und in dessen hinterer Hälfte die Leistungsverteilung mit der Seilwinde 4 und den Hydraulikventilen 37, 38 erfolgt. In der vorderen Hälfte des Antriebsteils ist für den in dem Motorraum 11 angeordneten Antriebsmotor 3 und die Hydraulikpumpen 10 eine eigene Wärme- und Schalldämmung vorgesehen. Weiterhin ist für die Auspuffanlage 48 eine eigene Wärmedämmung vorgesehen. In der hinteren Hälfte des Antriebsteils können weiterhin der Hydraulikraum 35 und der Serviceraum 50 gut zugänglich angeordnet werden sowie die Luftansaugung (Frischluftfilter 53) des Antriebsmotors 3 angeordnet werden. Bei der erfindungsgemäßen Forstmaschine bildet die hintere Fahrzeughälfte, die sich von der Trennwand 26 zum Fahrzeugheck erstreckt, einen Lastenteil, der mit der Runge 5, der Querversteifung 65 und dem verstellbaren Rampenschild 6 versehen ist.

Die hintere Fahrzeughälfte bildet somit ein Rungenabteil, das aus der Trennwand 26 hinter dem Windenturm 15, dem Bodenblech 12, der Runge 5, der festen Querversteifung 65 und dem verstellbaren Rampenschild 6 besteht und dient der Lastaufnahme.

Die waagerechte Bodenplatte 12 und der Unterboden 13 sorgen mittels der Schottwände 16 für Versteifungen und für einen geschützten Zwischenraum 14 als Einbauraum für die Hydraulikschläuche 39, 40.

Der kräfteführende Windenturm 15 mit den Streben 16 ist im Bereich der Fahrzeugmitte angeordnet, wodurch ein günstiger Kraftfluss erzielt wird. Die kräfteführenden Bauteile mit dem Windenturm 15 und den Streben 16 konzentrieren sich somit in Fahrzeuglängsrichtung in der Fahrzeugmitte.

Bei der erfindungsgemäßen Forstmaschine 1 ist eine äußere Abdeckhaube 75 vorgesehen (Figur 1), die als Gesamtabdeckung und Geräuschdämmung der vorderen Fahrzeughälfte dient. Die Abdeckhaube 75 begrenzt die Fahrzeugfrontseite und erstreckt sich an den beiden Fahrzeugaußenseiten bis zur Trennwand 26. Um die Abdeckhaube 75 vor direkter Krafteinleitung und mechanischen Beschädigungen zu schützen ist aus Rohren bestehender Schutzrahmen 76 für die Abdeckhaube 75 vorgesehen.

An der Fahrzeugfront und dem Fahrzeugheck kann weiterhin eine Befestigungsschnittstelle für eine Anhängekupplung angebracht sein. In der Figur 1 ist eine derartige Befestigungsschnittstelle 80 an der Fahrzeugfront dargestellt.

Der Motorraum 11, der Hydraulikraum 35, der Serviceraum 50, der Elektronikraum 55 und der Stauraum 42 sind bevorzugt als abgeschlossenen Räume ausgebildet, die jeweils an allen sechs Seiten von entsprechenden Wänden begrenzt sind und somit von benachbarten Räumen durch entsprechende Wände abgetrennt sind.

Die Hydraulikanlage der erfindungsgemäßen Forstmaschine 1 ist bevorzugt mit Bio-Hydrauliköl betrieben, beispielsweise einem Bio-Hydrauliköl auf Esterbasis. Eine mit biologischem Hydrauliköl betriebene Hydraulikanlage führt bei der erfindungsgemäßen Forstmaschine 1 zu besonderen Vorteilen, da im Einsatz in Forstgebieten mit dem Einsatz von biologischem Hydrauliköl mögliche Umweltschäden durch austretendes Hydrauliköl vermieden werden können.

Der als Verbrennungsmotor ausgebildete Antriebsmotor 3 kann als Dieselmotor oder Benzinmotor ausgebildet sein. Der als Verbrennungsmotor ausgebildete Antriebsmotor 3 kann mit mineralischem Kraftstoff, beispielsweise Diesel oder Benzin, betrieben sein. Bevorzugt wird ein Verbrennungsmotor als Antriebsmotor 3 der erfindungsgemäßen Forstmaschine 1 verwendet, der mit biologischem Kraftstoff betrieben ist, beispielsweise Bio-Diesel oder Bio-Gas oder Bio-Benzin. Ein mit biologischem Kraftstoff betriebener Verbrennungsmotor führt bei der erfindungsgemäßen Forstmaschine 1 zu besonderen Vorteilen, da im Einsatz in Forstgebieten mit dem Einsatz von biologischen Kraftstoffen zum Betrieb des Verbrennungsmotors mögliche Umweltschäden durch austretenden Kraftstoff vermieden werden.

## Patentansprüche

1. Mobile Forstmaschine (1), die mit einem Fahrwerk (2), einem Antriebsmotor (3), einer Seilwinde (4) und einer Runge (5) versehen ist, wobei die Forstmaschine (1) keinen Fahrerarbeitsplatz für einen Bediener aufweist, wobei in Fahrzeuglängsrichtung (L) gesehen vorne und an der Fahrzeugfront der Antriebsmotor (3) und benachbart zum Antriebsmotor (3) die Seilwinde (4) angeordnet ist, **dadurch gekennzeichnet, dass** die mobile Forstmaschine (1) mit einem verstellbaren Rampenschild (6) versehen ist, wobei in Fahrzeuglängsrichtung (L) gesehen benachbart zur Seilwinde (4) die Runge (5) und am Fahrzeugheck der mobilen Forstmaschine (1) das verstellbare Rampenschild (6) angeordnet sind, wobei die Seilwinde (4) in Fahrzeuglängsrichtung (L) gesehen zwischen dem Antriebsmotor (3) und der Runge (5) angeordnet ist.

2. Mobile Forstmaschine nach Anspruch 1, **dadurch gekennzeichnet, dass** der Antriebsmotor (3) mit einer Längsachse (LA) in Fahrzeugquerrichtung (Q) angeordnet ist und mindestens eine Hydraulikpumpe (10), insbesondere eine Verstellpumpe, einer Hydraulikanlage der Forstmaschine (1) antreibt.

3. Mobile Forstmaschine nach Anspruch 2, **dadurch gekennzeichnet, dass** der Antriebsmotor (3) und die Hydraulikpumpe (10) in einem geschlossenen Motorraum (11) angeordnet sind, der mit einer Dämmung versehen ist.

4. Mobile Forstmaschine nach einem der Ansprüche 1 bis 3, **dadurch gekennzeichnet, dass** der Antriebsmotor (3), die Seilwinde (4) und die Runge (5) in vertikaler Richtung oberhalb einer Bodenplatte (12) angeordnet sind und unterhalb der Bodenplatte (12) ein Unterboden (13) angeordnet ist, wobei zwischen der Bodenplatte (12) und dem Unterboden (13) ein Zwischenraum (14) ausgebildet ist.

5. Mobile Forstmaschine nach einem der Ansprüche 1 bis 4, **dadurch gekennzeichnet, dass** die Seilwinde (4) einen in Fahrzeugquerrichtung (Q) mittig angeordneten Windenturm (15) aufweist, der kraftführende Streben (16) aufweist, die mit dem Fahrwerk (2) verbunden sind.

6. Mobile Forstmaschine nach Anspruch 5, **dadurch gekennzeichnet, dass** die Streben (16) als Schottwände ausgebildet sind, die die Bodenplatte (12) mit dem Unterboden (13) verbinden.

7. Mobile Forstmaschine nach Anspruch 5 oder 6, **dadurch gekennzeichnet, dass** der Windenturm (15) an der Oberseite einen Seilauslauf (24) für ein Seil (S) der Seilwinde (4) aufweist.

8. Mobile Forstmaschine nach einem der Ansprüche 5 bis 7, **dadurch gekennzeichnet, dass** die Forstmaschine (1) an der der Runge (5) zugewandten Seite des Windenturms (15) eine in Fahrzeugquerrichtung (Q) verlaufende vertikale Trennwand (26) aufweist.

9. Mobile Forstmaschine nach einem der Ansprüche 4 bis 8, **dadurch gekennzeichnet, dass** der Antriebsmotor (3) mit Dämpfungselementen (30) auf der Bodenplatte (12) der Forstmaschine (1) aufsteht und eine zusätzliche, in vertikaler Richtung oberhalb der Dämpfungselemente (30) angeordnete Abstützung (31) vorgesehen ist, mit der der Antriebsmotor (3) an dem Windenturm (15) abgestützt ist.

10. Mobile Forstmaschine nach einem der Ansprüche 5 bis 9, **dadurch gekennzeichnet, dass** in Fahrzeugquerrichtung (Q) an einer ersten Seite des Windenturms (15) ein Hydraulikraum (35) ausgebildet ist, in dem eine oder mehrere der folgenden Komponenten der Hydraulikanlage der Forstmaschine (1) eingebaut sind:
• Öltank (36)
• Ölfilter (37)
• mindestens ein Hydraulikventil (38)

11. Mobile Forstmaschine nach einem der Ansprüche 5 bis 10, **dadurch gekennzeichnet, dass** in Fahrzeugquerrichtung (Q) an einer zweiten Seite des Windenturm (15) ein Serviceraum (50) ausgebildet ist, in dem eine oder mehrere der folgenden Komponenten der Forstmaschine eingebaut sind:
• ein Treibstofftank (51) des Antriebsmotors (3)
• eine Starterbatterie (52)
• ein Frischluftfilter (53) des Antriebsmotors (3)

12. Mobile Forstmaschine nach einem der Ansprüche 3 bis 11, **dadurch gekennzeichnet, dass** in Fahrzeugquerrichtung (Q) an einer Seite des Motorraums (11) ein Elektronikraum (55) ausgebildet ist, in dem eine oder mehrere der folgenden Komponenten einer Elektrikanlage der Forstmaschine (1) eingebaut sind:
• eine elektronische Fahrzeugsteuerung (56) der Forstmaschine (1)
• eine elektronische Steuerung (57) des Antriebsmotors (3)
• eine Fernsteuerung der Forstmaschine mit Ladegerät und ein Empfänger (58) der Fernsteuerung
• mindestens eine Steckdose (59)

13. Mobile Forstmaschine nach Anspruch 12, **dadurch gekennzeichnet, dass** in vertikaler Richtung oberhalb oder unterhalb des Elektronikraums (55) ein Stauraum (42) ausgebildet ist.

14. Mobile Forstmaschine nach einem der Ansprüche 2 bis 13, **dadurch gekennzeichnet, dass** in vertikaler Richtung oberhalb des Antriebsmotors (3) und der Hydraulikpumpe (10) eine oder mehrere der folgenden Komponenten angeordnet sind:
• eine Kühlereinrichtung (46) des Antriebsmotors (3)
• eine Kühlereinrichtung (47) der Hydraulikanlage
• eine Auspuffanlage (48) des Antriebsmotors (3)

15. Mobile Forstmaschine nach Anspruch 14, **dadurch gekennzeichnet, dass** ein Hitzeschutz- und Geräuschdämmkasten (85) vorgesehen ist, in dem die Auspuffanlage (48) angeordnet ist.

16. Mobile Forstmaschine nach Anspruch 14 oder 15, **dadurch gekennzeichnet, dass** die Kühlereinrichtung (46) des Antriebsmotor (3) und/oder die Kühlereinrichtung (47) der Hydraulikanlage liegend angeordnet ist mit einem Luftauslass eines Kühlluftstromes nach vertikal oben.

17. Mobile Forstmaschine nach einem der Ansprüche 10 bis 16, **dadurch gekennzeichnet, dass** in dem Zwischenraum (14) zwischen Bodenplatte (12) und Unterboden (13) Hydraulikschläuche (39, 40) verlegt sind, die die Verbraucher der Hydraulikanlage mit dem Hydraulikraum (35) verbinden.

18. Mobile Forstmaschine nach einem der Ansprüche 14 bis 16, **dadurch gekennzeichnet, dass** in der vertikalen Trennwand (26) Ansaugöffnungen für einen zu der Kühlereinrichtung (46) des Antriebsmotors (3) und der Kühlereinrichtung (47) der Hydraulikanlage führenden Kühlluftstrom angeordnet sind.

19. Mobile Forstmaschine nach einem der Ansprüche 1 bis 18, **dadurch gekennzeichnet, dass** eine Seilumlenkrolle (61) und eine Seilführung (62) mit einer Führungsschiene (63) für das Seil (S) der Seilwinde (4) vorgesehen sind, wobei die Führungsschiene (63) eine Austrittsöffnung (64) für das Seil (S) an der Fahrzeugfront aufweist.

20. Mobile Forstmaschine nach einem der Ansprüche 1 bis 19, **dadurch gekennzeichnet, dass** die Runge (5) um eine vertikale Achse (V) drehbar gelagert ist.

21. Mobile Forstmaschine nach einem der Ansprüche 4 bis 20, **dadurch gekennzeichnet, dass** in Fahrzeuglängsrichtung (L) zwischen der Runge (5) und dem Rampenschild (6) an der Bodenplatte (12) eine Querversteifung (65) angeordnet ist.

22. Mobile Forstmaschine nach Anspruch 3 und Anspruch 7, **dadurch gekennzeichnet, dass** in Fahrzeuglängsrichtung (L) zwischen dem Motorraum (11) und dem Seilauslauf (24) an dem Windenturm (15) eine in Fahrzeugquerrichtung (Q) verlaufende Ablagemulde (70) ausgebildet ist, die bevorzugt nach oben offen ausgebildet ist.

23. Mobile Forstmaschine nach Anspruch 3 oder nach Anspruch 3 und einem der Ansprüche 4 bis 22, **dadurch gekennzeichnet, dass** eine äußere Abdeckhaube (75) vorgesehen ist, die den Motorraum (11) an der Fahrzeugfrontseite begrenzt und sich an den beiden Fahrzeugaußenseiten bis zur Trennwand (26) erstreckt.

24. Mobile Forstmaschine nach Anspruch 23, **dadurch gekennzeichnet, dass** ein aus Rohren bestehender Schutzrahmen (76) für die Abdeckhaube (70) vorgesehen ist.

## Claims

1. Mobile forestry machine (1) which is provided with a chassis (2), a drive engine (3), a hoisting winch (4) and a stanchion (5), wherein the forestry machine (1) does not have a driver's workplace for an operator, wherein the drive engine (3) is arranged at the front as viewed in the vehicle longitudinal direction (L) and on the vehicle front, and the hoisting winch (4) is arranged adjacently with respect to the drive engine (3), **characterized in that** the mobile forestry machine (1) is provided with an adjustable ramp plate (6), wherein the stanchion (5) is arranged adjacently with respect to the hoisting winch (4) as viewed in the vehicle longitudinal direction (L), and the adjustable ramp plate (6) is arranged on the vehicle rear of the mobile forestry machine (1), wherein the hoisting winch (4) is arranged between the drive engine (3) and the stanchion (5) as viewed in the vehicle longitudinal direction (L).

2. Mobile forestry machine according to Claim 1, **characterized in that** the drive engine (3) is arranged with a longitudinal axis (LA) in the vehicle transverse direction (Q) and drives at least one hydraulic pump (10), in particular a variable displacement pump, of a hydraulic system of the forestry machine (1).

3. Mobile forestry machine according to Claim 2, **characterized in that** the drive engine (3) and the hydraulic pump (10) are arranged in a closed engine
compartment (11) which is provided with an insulation means.

4. Mobile forestry machine according to one of Claims 1 to 3, **characterized in that** the drive engine (3), the hoisting winch (4) and the stanchion (5) are arranged above a base plate (12) in the vertical direction, and an undertray (13) is arranged below the base plate (12), wherein an intermediate space (14) is configured between the base plate (12) and the undertray (13).

5. Mobile forestry machine according to one of Claims 1 to 4, **characterized in that** the hoisting winch (4) has a winch tower (15) which is arranged centrally in the vehicle transverse direction (Q) and has force-transmitting struts (16) which are connected to the chassis (2).

6. Mobile forestry machine according to Claim 5, **characterized in that** the struts (16) are configured as bulkhead partitions which connect the base plate (12) to the undertray (13).

7. Mobile forestry machine according to Claim 5 or 6, **characterized in that** the winch tower (15) has a cable outlet (24) for a cable (S) of the hoisting winch (4) on the upper side.

8. Mobile forestry machine according to one of Claims 5 to 7, **characterized in that** the forestry machine (1) has a vertical bulkhead (26) which runs in the vehicle transverse direction (Q) on that side of the winch tower (15) which faces the stanchion (5).

9. Mobile forestry machine according to one of Claims 4 to 8, **characterized in that** the drive engine (3) stands on the base plate (12) of the forestry machine (1) by way of damping elements (30), and an additional support (31) which is arranged above the damping elements (30) in the vertical direction is provided, by way of which support (31) the drive engine (3) is supported on the winch tower (15) .

10. Mobile forestry machine according to one of Claims 5 to 9, **characterized in that** a hydraulics space (35) is configured on a first side of the winch tower (15) in the vehicle transverse direction (Q), in which hydraulics space (35) one or more of the following components of the hydraulic system of the forestry machine (1) are installed:
• oil tank (36)
• oil filter (37)
• at least one hydraulic valve (38).

11. Mobile forestry machine according to one of Claims 5 to 10, **characterized in that** a service space (50) is configured on a second side of the winch tower (15) in the vehicle transverse direction (Q), in which service space (50) one or more of the following components of the forestry machine are installed:
• a fuel tank (51) of the drive engine (3)
• a starter battery (52)
• a fresh air filter (53) of the drive engine (3).

12. Mobile forestry machine according to one of Claims 3 to 11, **characterized in that** an electronics space (55) is configured on one side of the engine compartment (11) in the vehicle transverse direction (Q), in which electronics space (55) one or more of the following components of an electrical system of the forestry machine (1) are installed:
• an electronic vehicle controller (56) of the forestry machine (1)
• an electronic controller (57) of the drive engine (3)
• a remote control of the forestry machine with a charging unit, and a receiver (58) of the remote control
• at least one power socket (59).

13. Mobile forestry machine according to Claim 12, **characterized in that** a storage space (42) is configured above or below the electronics space (55) in the vertical direction.

14. Mobile forestry machine according to one of Claims 2 to 13, **characterized in that** one or more of the following components are arranged above the drive engine (3) and the hydraulic pump (10) in the vertical direction:
• a radiator device (46) of the drive engine (3)
• a radiator device (47) of the hydraulic system
• an exhaust system (48) of the drive engine (3).

15. Mobile forestry machine according to Claim 14, **characterized in that** a heat shield and noise insulation box (85) is provided, in which the exhaust system (48) is arranged.

16. Mobile forestry machine according to Claim 14 or 15, **characterized in that** the radiator device (46) of the drive engine (3) and/or the radiator device (47) of the hydraulic system are/is arranged horizontally with an air outlet of a cooling air flow vertically upwards.

17. Mobile forestry machine according to one of Claims 10 to 16, **characterized in that** hydraulic hoses (39, 40) which connect the consumers of the hydraulic system to the hydraulic space (35) are routed in the intermediate space (14) between the base plate (12) and the undertray (13) .

18. Mobile forestry machine according to one of Claims 14 to 16, **characterized in that** intake openings for a cooling air flow which leads to the radiator device (46) of the drive engine (3) and the radiator device (47) of the hydraulic system are arranged in the vertical bulkhead (26).

19. Mobile forestry machine according to one of Claims 1 to 18, **characterized in that** a cable deflection roller (61) and a cable guide (62) with a guide rail (63) for the cable (S) of the hoisting winch (4) are provided, wherein the guide rail (63) has an outlet opening (64) for the cable (S) on the vehicle front.

20. Mobile forestry machine according to one of Claims 1 to 19, **characterized in that** the stanchion (5) is mounted rotatably about a vertical axis (V).

21. Mobile forestry machine according to one of Claims 4 to 20, **characterized in that** a transverse reinforcement (65) is arranged between the stanchion (5) and the ramp plate (6) on the base plate (12) in the vehicle longitudinal direction (L).

22. Mobile forestry machine according to Claim 3 and Claim 7, **characterized in that** a storage recess (70) which runs in the vehicle transverse direction (Q) and is preferably configured so as to be open at the top is configured between the engine compartment (11) and the cable outlet (24) on the winch tower (15) in the vehicle longitudinal direction (L).

23. Mobile forestry machine according to Claim 3 or according to Claim 3 and one of Claims 4 to 22, **characterized in that** an outer covering hood (75) is provided which delimits the engine compartment (11) on the vehicle front side and extends on the two vehicle outer sides far as the bulkhead (26).

24. Mobile forestry machine according to Claim 23, **characterized in that** a protective frame (76) which consists of tubes is provided for the covering hood (70).

## Revendications

1. Machine forestière mobile (1), qui est munie d'un châssis (2), d'un moteur d'entraînement (3), d'un treuil (4) et d'un rancher (5), la machine forestière (1) ne présentant aucun poste de travail de conducteur pour un opérateur, dans laquelle, vu dans la direction longitudinale du véhicule (L), le moteur d'entraînement (3) est disposé à l'avant et sur la face avant de véhicule, et le treuil (4) est disposé à côté du moteur d'entraînement (3),
**caractérisée en ce que** la machine forestière mobile (1) est munie d'une lame formant rampe réglable (6), dans laquelle, vu dans la direction longitudinale du véhicule (L), le rancher (5) est disposé à côté du treuil (4), et la lame formant rampe réglable (6) est disposée à l'arrière du véhicule de la machine forestière mobile (1), le treuil (4) étant disposé entre le moteur d'entraînement (3) et le rancher (5), vu dans la direction longitudinale du véhicule (L).

2. Machine forestière mobile selon la revendication 1, **caractérisée en ce que** le moteur d'entraînement (3) est disposé avec son axe longitudinal (LA) dans la direction transversale du véhicule (Q) et entraîne au moins une pompe hydraulique (10), en particulier une pompe de réglage, d'un système hydraulique de la machine forestière (1).

3. Machine forestière mobile selon la revendication 2, **caractérisée en ce que** le moteur d'entraînement (3) et la pompe hydraulique (10) sont disposés dans un compartiment moteur fermé (11) qui est muni d'une isolation.

4. Machine forestière mobile selon l'une quelconque des revendications 1 à 3, **caractérisée en ce que** le moteur d'entraînement (3), le treuil (4) et le rancher (5) sont disposés dans la direction verticale au-dessus d'une plaque de base (12), et un dessous de caisse (13) est disposé au-dessous de la plaque de base, un espace (14) étant réalisé entre la plaque de base (12) et le dessous de caisse (13).

5. Machine forestière mobile selon l'une quelconque des revendications 1 à 4, **caractérisée en ce que** le treuil (4) présente une tourelle à treuil (15) disposée au centre dans la direction transversale du véhicule (Q) et qui présente des entretoises de transmission de force (16) qui sont reliées au châssis (2).

6. Machine forestière mobile selon la revendication 5, **caractérisée en ce que** les entretoises (16) sont réalisées sous forme de cloisons étanches qui relient la plaque de base (12) au dessous de caisse (13).

7. Machine forestière mobile selon la revendication 5 ou 6, **caractérisée en ce que** la tourelle à treuil (15) présente sur la face supérieure une sortie de câble (24) pour un câble (S) du treuil (4).

8. Machine forestière mobile selon l'une quelconque des revendications 5 à 7, **caractérisée en ce que** la machine forestière (1) présente une cloison de séparation verticale (26) sur le côté, tourné vers le rancher (5), de la tourelle à treuil (15), s'étendant dans la direction transversale du véhicule (Q).

9. Machine forestière mobile selon l'une quelconque des revendications 4 à 8, **caractérisée en ce que** le moteur d'entraînement (3) doté d'éléments isolants (30) est posé sur la plaque de base (12) de la machine forestière (1), et un appui (31) supplémentaire, disposé dans la direction verticale au-dessus des éléments isolants (30), est prévu par lequel le moteur d'entraînement (3) prend appui sur la tourelle à treuil (15) .

10. Machine forestière mobile selon l'une quelconque des revendications 5 à 9, **caractérisée en ce que** dans la direction transversale du véhicule (Q), sur un premier côté de la tourelle à treuil (15), un compartiment hydraulique (35) est réalisé dans lequel un ou plusieurs des composants suivants du système hydraulique de la machine forestière (1) sont installés :
• un réservoir d'huile (36),
• un filtre à huile (37),
• au moins une vanne hydraulique (38).

11. Machine forestière mobile selon l'une quelconque des revendications 5 à 10, **caractérisée en ce que** dans la direction transversale du véhicule (Q), sur un deuxième côté de la tourelle à treuil (15), un compartiment de service (50) est réalisé dans lequel un ou plusieurs des composants suivants de la machine forestière sont installés :
• un réservoir à carburant (51) du moteur d'entraînement (3),
• une batterie de démarreur (52),
• un filtre à air frais (53) du moteur d'entraînement (3).

12. Machine forestière mobile selon l'une quelconque des revendications 3 à 11, **caractérisée en ce que** dans la direction transversale du véhicule (Q), sur un côté du compartiment moteur (11), un compartiment électronique (55) est réalisé dans lequel un ou plusieurs des composants suivants d'un système électrique de la machine forestière (1) sont installés :
• une commande de véhicule électronique (56) de la machine forestière (1),
• une commande électronique (57) du moteur d'entraînement (3),
• une télécommande de la machine forestière avec le chargeur et un récepteur (58) de la télécommande,
• au moins une prise (59).

13. Machine forestière mobile selon la revendication 12, **caractérisée en ce que** dans la direction verticale, un compartiment de rangement (42) est réalisé au-dessus ou au-dessous du compartiment électronique (55).

14. Machine forestière mobile selon l'une quelconque des revendications 2 à 13, **caractérisée en ce que** dans la direction verticale, au-dessus du moteur d'entraînement (3) et de la pompe hydraulique (10), un ou plusieurs des composants suivants sont disposés :
• un dispositif de refroidissement (46) du moteur d'entraînement (3),
• un dispositif de refroidissement (47) du système hydraulique,
• un système d'échappement (48) du moteur d'entraînement (3).

15. Machine forestière mobile selon la revendication 14, **caractérisée en ce qu'**un caisson de protection thermique et d'isolation phonique (85) est prévu dans lequel est disposé le système d'échappement (48).

16. Machine forestière mobile selon la revendication 14 ou 15, **caractérisée en ce que** le dispositif de refroidissement (46) du moteur d'entraînement (3) et/ou le dispositif de refroidissement (47) du système hydraulique est/sont disposé(s) avec une sortie d'air d'un flux d'air de refroidissement orientée verticalement vers le haut.

17. Machine forestière mobile selon l'une quelconque des revendications 10 à 16, **caractérisée en ce que** dans l'espace (14) entre la plaque de base (12) et le bas de caisse (13), des tuyaux hydrauliques (39, 40) sont posés qui relient les consommateurs du système hydraulique au compartiment hydraulique (35).

18. Machine forestière mobile selon l'une quelconque des revendications 14 à 16, **caractérisée en ce que** des ouvertures d'aspiration pour un flux d'air de refroidissement menant au dispositif de refroidissement (46) du moteur d'entraînement (3) et au dispositif de refroidissement (47) du système hydraulique sont disposées dans la cloison de séparation verticale (26).

19. Machine forestière mobile selon l'une quelconque des revendications 1 à 18, **caractérisée en ce qu'**une poulie de renvoi de câble (61) et un guidage de câble (62) doté d'un rail de guidage (63) pour le câble (S) du treuil (4) sont prévus, le rail de guidage (63) présentant une ouverture de sortie (64) pour le câble (S) sur l'avant du véhicule.

20. Machine forestière mobile selon l'une quelconque des revendications 1 à 19, **caractérisée en ce que** le rancher (5) est monté rotatif autour d'un axe vertical (V) .

21. Machine forestière mobile selon l'une quelconque des revendications 4 à 20, **caractérisée en ce que** dans la direction longitudinale du véhicule (L) un renfort transversal (65) est disposé sur la plaque de base (12) entre le rancher (5) et la lame formant rampe (6).

22. Machine forestière mobile selon les revendications 3 et 7, **caractérisée en ce que** dans la direction longitudinale du véhicule (L), entre le compartiment moteur (11) et la sortie de câble (24) sur la tourelle à treuil (15) est réalisé un creux de rangement (70) s'étendant dans la direction transversale du véhicule (Q) qui est réalisé de préférence en étant ouvert vers le haut.

23. Machine forestière mobile selon la revendication 3 ou selon la revendication 3 et selon l'une des revendications 4 à 22, **caractérisée en ce qu'**un capot extérieur (75) est prévu qui délimite le compartiment moteur (11) sur le côté avant du véhicule et s'étend sur les deux côtés extérieurs du véhicule jusqu'à la cloison de séparation (26).

24. Machine forestière mobile selon la revendication 23, **caractérisée en ce qu'**un cadre de protection (76) composé de tubes est prévu pour le capot (70).
